# EUROPÄISCHE PATENTSCHRIFT

(11) **EP 3 944 051 B1**
(45) Veröffentlichungstag und Bekanntmachung des Hinweises auf die Patenterteilung: **10.04.2024**
(21) Anmeldenummer: 21184396.6
(22) Anmeldetag: 08.07.2021
(51) Int. Cl.: G05D 1/02

(54) **VERFAHREN ZUM KOORDINIEREN EINES FAHRZEUGES AUF EINEM BETRIEBSHOF, SOWIE FUNKTIONS-STEUEREINRICHTUNG UND FAHRZEUG**
FUNCTIONAL CONTROL DEVICE AND VEHICLE AND METHOD FOR COORDINATING A VEHICLE IN AN OPERATING DEPOT
PROCÉDÉ DE COORDINATION D'UN VÉHICULE DANS UN DÉPÔT, AINSI QUE DISPOSITIF DE COMMANDE FONCTIONNEL ET VÉHICULE

(30) Priorität: 22.07.2020 DE 102020119318
(43) Veröffentlichungstag der Anmeldung: 26.01.2022
(73) Patentinhaber: ZF CV Systems Global GmbH, 3006 Bern (CH)
(72) Erfinder: RICKE, Janik, 31311 Uetze (DE)
(74) Vertreter: Rabe, Dirk-Heinrich

(56) Entgegenhaltungen:
- US-A1- 2017 038 777
- US-A1- 2019 196 491
- US-A1- 2020 150 686
- US-A1- 2020 223 647

## Beschreibung

Die Erfindung betrifft ein Verfahren zum Koordinieren eines Fahrzeuges auf einem abgeschlossenen Gelände, insbesondere auf einem Betriebshof, sowie eine Funktions-Steuereinrichtung und ein Fahrzeug zur Durchführung des Verfahrens.

Auf automatisierten bzw. semi-automatisierten Betriebshöfen bzw. Speditionshöfen kann ein stationäres lokales Netzwerk vorhanden sein, das ein räumlich begrenztes Umfeld des Betriebshofes abdeckt und über das ein Datenaustausch zwischen einem eintreffenden Fahrzeug und dem Betriebshof stattfinden kann. Derzeitige automatisierte bzw. semiautomatisierte Betriebshöfe nutzen die Datenverbindung zwischen dem Fahrzeug und einem Zentralmodul des stationären lokalen Netzwerkes nur sehr eingeschränkt für eine Erhöhung des Automatisierungsgrades.

So ist in DE 10 2014 224 124 A1 beschrieben, dass sich das Fahrzeug anmeldet und von einem Zentralmodul des Betriebshofes Daten erhält, welche eine genaue Startposition und eine genaue Zielposition sowie auch eine Trajektorie zwischen den beiden Positionen vorgeben. Eine Steuerungseinrichtung im Fahrzeug ist dann ausgebildet, das Fahrzeug basierend auf den empfangenen Daten von der Startposition zu der Zielposition entlang der vorgegebenen Trajektorie zu steuern.

In DE 103 22 765 A1 ist ferner beschrieben, dass das Fahrzeug autonom zu einzelnen Stationen gefahren wird, wobei dazu auf eine Bahnberechnung zum Ermitteln einer Trajektorie zurückgegriffen wird. Das Fahrzeug bewegt sich dann zwischen den einzelnen Stationen auf dieser vorgegebenen Trajektorie.

In DE 10 2016 116 857 A1 ist ebenfalls eine automatisierte Steuerung eines Fahrzeuges von einer Einfahrt bzw. einem Zugang zu einem Zielpunkt entlang einem Bewegungspfad bzw. einer Trajektorie vorgesehen.

Nachteilig bei den bekannten Verfahren zum Erhöhen des Automatisierungsrades ist dabei, dass den Fahrzeugen Trajektorien zu den jeweiligen Zielpositionen vorgegeben werden, die diese ggf. nicht einhalten können oder die für einen effizienten Betrieb auf dem Hof nicht optimal sind. Das jeweilige Fahrzeug wird dadurch in seiner Bewegung ggf. unverhältnismäßig eingeschränkt. Ferner werden lediglich Vorgaben gemacht, die die Fahrdynamik bzw. die Bewegung des Fahrzeuges zwischen der Startposition und der Zielposition betreffen.

Aufgabe der Erfindung ist daher, ein Verfahren zum Koordinieren eines Fahrzeuges auf einem Betriebshof anzugeben, so dass sich das Fahrzeug auf dem Betriebshof flexibel und dennoch sicher bewegen kann. Aufgabe der Erfindung ist weiterhin, eine Funktions-Steuereinrichtung und ein Fahrzeug anzugeben.

Diese Aufgabe wird durch ein Verfahren nach Anspruch 1 sowie eine Funktions-Steuereinrichtung gemäß den weiteren unabhängigen Ansprüchen gelöst. Die Unteransprüche geben bevorzugte Weiterbildungen an.

Erfindungsgemäß ist also ein Verfahren zum Koordinieren eines Fahrzeuges, insbesondere eines Nutzfahrzeuges, auf einem Betriebshof angegeben, wobei der Betriebshof in mehrere Funktionsbereiche unterteilt ist, wobei das Fahrzeug auf dem Betriebshof durch zumindest einige der Funktionsbereiche in einen festgelegten Zielbereich gesteuert wird. Unter Koordinieren wird hierbei verstanden, dass dem Fahrzeug gewisse Regeln oder Verhaltensweisen übermittelt werden, die es auf dem Weg zum Zielbereich beim Durchfahren der einzelnen Funktionsbereiche einzuhalten hat. Das Verfahren wird dazu mit mindestens den folgenden Schritten durchgeführt:
Empfangen eines Fahrprofils, wobei das Fahrprofil mindestens eine Funktionsregel beinhaltet, wobei jede Funktionsregel einem Funktionsbereich auf dem Betriebshof zugeordnet ist und die Funktionsregel festlegt, wie das Fahrzeug auf dem Betriebshof in dem jeweils zugeordneten Funktionsbereich angesteuert wird und/oder nicht angesteuert werden darf. Daher werden positionsbezogen Regeln bzw. Verhaltensweisen für das Fahrzeug festgelegt und diese über das Fahrprofil an das Fahrzeug übermittelt.

Während das Fahrzeug durch zumindest einige der Funktionsbereiche in den Zielbereich gesteuert wird, werden nachfolgend die weiteren Schritte durchgeführt:
- fortlaufendes Ermitteln einer Position des Fahrzeuges auf dem Betriebshof, vorzugsweise beschrieben durch absolute oder relative Koordinaten;
- Ermitteln des Funktionsbereiches, der der aktuell ermittelten Position des Fahrzeuges zugeordnet ist und der vorzugsweise ebenfalls durch absolute oder relative Koordinaten beschrieben ist, wobei diese Ermittlung anhand des empfangenen Fahrprofils erfolgt;
- Einlesen der Funktionsregel, die dem ermittelten Funktionsbereich zugeordnet ist, wobei dies ebenfalls anhand des empfangenen Fahrprofils erfolgt; und
- Ansteuern des Fahrzeuges in Abhängigkeit der eingelesen Funktionsregel derartig, dass die Funktionsregel im aktuell durchfahrenen Funktionsbereich umgesetzt wird. Das Fahrzeug wird also letztlich so angesteuert oder eben nicht angesteuert, wie es die Funktionsregel vorgibt bzw. festlegt. Dies kann vorzugsweise derartig erfolgen, dass mindestens ein Fahrzeug-System des Fahrzeuges aktiv bzw. gezielt angesteuert wird und/oder eine Ansteuerung mindestens eines Fahrzeug-Systems gezielt eingeschränkt wird und/oder eine Ansteuerung ganz verhindert wird.

Vorteilhafterweise werden dem Fahrzeug über das Fahrprofil also einfache Verhaltensanweisungen übermittelt, die es auf dem Weg in den Zielbereich einzuhalten hat. Demnach ist keine strenge Vorgabe einer Trajektorie zwischen der aktuellen Position (Ausgangspunkt) und einer festgelegten Position im Zielbereich (Zielpunkt) von außerhalb (extern) nötig, wodurch die starre Festlegung einer solchen Trajektorie von extern, beispielsweise durch den Betriebshof, entfallen kann. Vielmehr werden lediglich ausgedehnte, kartographierte Bereiche vorgegeben, innerhalb derer sich das Fahrzeug bis zum Zielbereich nahezu frei bewegen kann. Die Koordination und der Datenaufwand werden dadurch insgesamt optimiert und das Fahrzeug kann den Weg zum Zielbereich unter Einhaltung der festgelegten Funktionsregeln, die örtliche und/oder fahrdynamische Beschränkungen beinhalten können, selbst wählen. Daher hat das Fahrzeug auch weiterhin einen gewissen Bewegungsspielraum, der entweder durch eine manuelle oder durch eine automatisierte Steuerung ausgenutzt werden kann.

Der Betreiber des Betriebshofes kann den Betriebshof dabei vorab kartographieren und unter Sicherheitsaspekten festlegen, wie sich ein Fahrzeug in dem jeweiligen Funktionsbereich verhalten soll. Dazu stehen gewisse Funktionsregeln zur Verfügung, auf die auch das Fahrzeug Zugriff hat, indem die Funktionsregeln beispielsweise auch in einer Bibliothek auf dem Fahrzeug abgespeichert sind.

Vorzugsweise ist weiterhin vorgesehen, dass das Fahrprofil dem Fahrzeug zugeordnet ist und das Fahrprofil über ein lokales Netzwerk, beispielsweise eine WLAN-Netzwerk des Betriebshofes, bereitgestellt wird. Das Fahrprofil kann also vorteilhafterweise fahrzeugspezifisch festgelegt werden, so dass für jedes Fahrzeug bereichsweise auch andere Regeln gelten können, beispielsweise je nach Aufgabenbereich oder Art des Fahrzeuges. Der Weg durch diese Funktionsbereiche kann dann von jedem Fahrzeug flexibel unter Beachtung der Funktionsregeln gewählt werden.

Ergänzend dazu kann vorgesehen sein, dass sich das Fahrzeug über Zugangsdaten und/oder Authentisierungsdaten in das lokale Netzwerk einwählt, um Zugang zum lokalen Netzwerk sowie auf ein Gelände des Betriebshofes zum Befahren der Funktionsbereiche zu erhalten. Dadurch kann der Zugang zum Betriebshof nur berechtigten Teilnehmern gewährt werden und gleichzeitig auch festgestellt werden, welche Aufgabe das jeweilige Fahrzeug auf dem Betriebshof hat und ggf. auch welche Funktionsbereiche mit welchen Funktionsregeln befahren werden dürfen.

Vorzugsweise ist weiterhin vorgesehen, dass das Fahrzeug auf dem Betriebshof von einem Zugangs-Bereich zu einem dem Fahrzeug zugeordneten Zielbereich gesteuert wird, wobei die Funktionsbereiche auf dem Weg vom Zugangs-Bereich zum Zielbereich durchfahren werden. Im Zugangs-Bereich kann dabei vorzugsweise das Übermitteln des Fahrprofils erfolgen, nachdem eine Zugangsberechtigung geprüft wurde und der Zugang zum Betriebshof freigegeben wurde. Vorzugsweise kann der Zielbereich dabei in Abhängigkeit einer geladenen oder aufzuladenden Fracht und/oder in Abhängigkeit einer dem Fahrzeug zugeordneten Teilnehmer-Kennung, die auch zur Identifizierung und/oder Authentisierung nötig ist, festgelegt werden. Zur Koordination über das Fahrprofil werden also weitere spezifische Angaben zum jeweiligen Fahrzeug verwendet.

Vorzugsweise ist weiterhin vorgesehen, dass die Funktionsregeln der einzelnen Funktionsbereiche derartig in dem Fahrprofil festgelegt sind, dass das Fahrzeug auf dem Betriebshof lediglich durch die Funktionsbereiche gesteuert wird und/oder gesteuert werden darf, die zum Erreichen des Zielbereiches nötig sind und/oder die zum Erreichen des Zielbereiches zugelassen sind. Für die Koordination des Fahrzeuges auf dem Betriebshof können also in einfacher Weise entsprechende ortsgebundene Verhaltensweisen vorgegeben werden, die das Einfahren in nicht benötigte oder nicht zugelassene Funktionsbereiche des Betriebshofes ohne großen Aufwand verbietet, beispielsweise indem in diesen nicht benötigten bzw. nicht zugelassenen Funktionsbereichen eine Funktionsregel mit einem allgemeinen Fahr-Verbot festgelegt wird.

Vorzugsweise ist weiterhin vorgesehen, dass das Fahrzeug-System ein Bremssystem und/oder ein Antriebssystem und/oder ein Lenksystem des Fahrzeuges ist, dessen Ansteuerung zugelassen oder eingeschränkt oder verhindert werden kann, um die Funktionsregel in dem jeweiligen Funktionsbereich umzusetzen. Daher kann vorteilhafterweise gezielt in die Fahrdynamik des Fahrzeuges eingegriffen werden, falls die jeweilige Funktionsregel dies erfordert, beispielsweise weil das Lenken in eine Richtung eingeschränkt ist oder eine Rückwärtsfahrt oder das Überschreiten einer Maximalgeschwindigkeit oder eine generelle Einfahrt in einen Funktionsbereich verboten ist.

Vorzugsweise ist weiterhin vorgesehen, dass das Fahrzeug-System ein Niveauregelsystem und/oder eine Abladesystem und/oder ein Türsystem und/oder ein Kopplungssystem ist, dessen Ansteuerung zugelassen oder eingeschränkt oder verhindert werden kann, um die Funktionsregel in dem jeweiligen Funktionsbereich umzusetzen. Daher kann vorteilhafterweise auch das Öffnen einer Tür des Zugfahrzeuges und/oder des Anhängers, das Abladen einer Fracht oder das Abkoppeln eines Anhängers oder das Absenken des Fahrgestells des Fahrzeuges gesteuert werden, so dass nicht nur örtliche und fahrdynamische Verhaltensregeln über das Fahrprofil festgelegt werden können.

Vorzugsweise ist weiterhin vorgesehen, dass die Funktionsregel in dem jeweiligen Funktionsbereich mindestens ein Verbot aufweist, das ausgewählt ist aus der Gruppe bestehend aus: einem Abkoppel-Verbot, einem Fahr-Verbot, einem Ablade-Verbot, einem Rückwärtsfahr-Verbot, einem Türöffnungs-Verbot, einem Wende-Verbot. Dadurch können vorteilhafterweise gezielte Verbote ausgesprochen werden, die durch eine automatisierte Ansteuerung oder einem Verbot der manuellen oder automatisierten Ansteuerung des entsprechenden Fahrzeug-Systems in einfacher Weise umgesetzt werden können.

Vorzugsweise kann aber auch vorgesehen sein, dass die Funktionsregel in dem jeweiligen Funktionsbereich eine Vorfahrt-Anweisung und/oder eine einzuhaltende Maximalgeschwindigkeit aufweist. Daher können auch derartige Anweisungen oder Verhaltensweisen vorgeben werden, die ebenfalls durch eine entsprechende automatisierte Ansteuerung oder einem Verbot der manuellen oder automatisierten Ansteuerung des jeweils zutreffenden Fahrzeug-Systems, z.B. Bremssystem, umgesetzt werden können.

Vorzugsweise ist weiterhin vorgesehen, dass die mehreren Funktionsbereiche auf dem Betriebshof Bereiche sind, die ausgewählt sind aus der Gruppe bestehend aus: einem Zugangsbereich, einem Fahrspurbereich, mindestens einem Gebäudebereich mit jeweils einem Gebäude und mit Rampen, einem Ladebereich für Schüttgut, einem ersten Stellbereich zum Abstellen eines Anhängers, einem zweiten Stellbereich zum Abstellen eines Containers auf einer Wechselbrücke, einem Silobereich zum Aufnehmen von Gut aus einem Silo, einem Wartebereich, einem Ausgangsbereich. Daher ist ein variabler Aufbau des Betriebshofes möglich, für den in flexibler Weise unterschiedliche Bereiche kartographiert werden können.

Vorzugsweise ist weiterhin vorgesehen, dass die fortlaufende Ermittlung der Position des Fahrzeuges durch Ermittlung von absoluten Koordinaten und/oder relativen Koordinaten des Fahrzeuges auf dem Betriebshof erfolgt, beispielsweise über ein Positionserfassungssystem und/oder durch Odometrie, wobei auch die einzelnen Funktionsbereiche durch absolute Koordinaten und/oder relative Koordinaten festgelegt sind. Dadurch kann in einfacher Weise und mit bestehender Sensorik im Fahrzeug ermittelt werden, in welchem Funktionsbereich sich das Fahrzeug gerade befindet. Vorzugsweise ist weiterhin vorgesehen, dass das Fahrzeug anhand einer geplanten Trajektorie durch die zumindest einigen Funktionsbereiche auf dem Betriebshof gesteuert wird, wobei die Trajektorie in Abhängigkeit der eingelesenen Funktionsregeln und/oder des übermittelten Fahrprofils vorzugsweise im Fahrzeug selbst individuell geplant wird. Daher ist gerade keine externe Vorgabe (z.B. vom Betriebshof) einer starr einzuhaltenden Trajektorie wie im Stand der Technik vorgesehen. Damit kann anhand der Beschränkungen aus dem Fahrprofil bzw. der Funktionsregeln für jedes Fahrzeug individuell ein optimaler Pfad durch die jeweils zugelassenen oder nötigen Funktionsbereiche zum Zielbereich ermittelt werden, der entweder durch eine automatisiert Ansteuerung des Fahrzeuges umgesetzt wird oder der dem Fahrer angezeigt wird, so dass er sich entlang des Pfades optimal bewegen kann. Grundsätzlich kann das manuell oder automatisiert gesteuerte Fahrzeug im Rahmen der Vorgaben bzw. Funktionsregeln aus dem Fahrprofil aber auch von der Trajektorie abweichen bzw. kann die Trajektorie situationsbedingt auch angepasst werden. Daher ist auch weiterhin eine variable Fahrt durch die einzelnen Funktionsbereiche unter Beachtung der Funktionsregeln möglich.

Vorzugsweise ist weiterhin vorgesehen, dass eine Notfall-Funktion vorgesehen ist, wobei das Fahrzeug bei Aktivieren der Notfall-Funktion unabhängig von den vorgegebenen Funktionsregeln und/oder des übermittelten Fahrprofils in dem jeweiligen Funktionsbereich gesteuert wird. In gewissen Situationen kann also auch von den Funktionsregeln abgewichen werden, beispielsweise bei Notfällen oder vorzugsweise dann, wenn sich das Fahrzeug im jeweiligen Funktionsbereich an einer Position befindet, in der das Fahrzeug die jeweils zugeordnete Funktionsregel nicht mehr umsetzen kann. Dies kann dann der Fall sein, wenn sich das Fahrzeug "festgefahren" hat oder einen Defekt aufweist, der das Einhalten der Funktionsregeln nicht möglich macht. Die Steuerung des Fahrzeuges kann bei aktivierter Notfall-Funktion beispielsweise durch einen Teleoperator übernommen werden oder aber durch den Fahrer, falls dieser im Fahrzeug anwesend ist. Erfindungsgemäß ist weiterhin eine Funktions-Steuereinrichtung zur Durchführung des erfindungsgemäßen Verfahrens vorgesehen, wobei die Funktions-Steuereinrichtung ausgebildet ist,
- ein Fahrprofil zu empfangen, wobei das Fahrprofil mindestens eine Funktionsregel beinhaltet, wobei jede Funktionsregel einem Funktionsbereich auf dem Betriebshof zugeordnet ist und die Funktionsregel festlegen kann, wie das Fahrzeug auf dem Betriebshof in dem jeweils zugeordneten Funktionsbereich angesteuert werden kann und/oder nicht angesteuert werden darf;
- fortlaufend eine Position des Fahrzeuges auf dem Betriebshof zu ermitteln;
- aus dem empfangenen Fahrprofil den Funktionsbereich zu ermitteln, der der aktuell ermittelten Position des Fahrzeuges zugeordnet ist;
- aus dem empfangenen Fahrprofil die Funktionsregel einzulesen, die dem ermittelten Funktionsbereich zugeordnet ist; und
- das Fahrzeug in Abhängigkeit der eingelesen Funktionsregel derartig anzusteuern, dass die Funktionsregel im aktuell durchfahrenen Funktionsbereich umgesetzt werden kann. Die Funktions-Steuereinrichtung kann dabei eigenständig sein und Zugriff auf die jeweils nötigen Fahrzeugkomponenten haben, beispielsweise über einen Datenbus, oder aber in einer der Fahrzeug-Systeme, beispielsweise im Bremssystem, integriert sein.

Weiterhin ist ein erfindungsgemäßes Fahrzeug vorgesehen, insbesondere ein Nutzfahrzeug, das eine erfindungsgemäße Funktions-Steuereinrichtung aufweist, so dass das erfindungsgemäße Verfahren darin durchgeführt werden kann. Das Fahrzeug kann dabei einteilig oder zweiteilig sein und die Funktions-Steuereinrichtung kann bei einer zweiteiligen Ausführung in einem Zugfahrzeug oder in einem Anhänger angeordnet sein, um die Fahrt auf dem Betriebshof entsprechend koordinieren zu können.

Die Erfindung wird im Folgenden anhand von Figuren näher erläutert. Es zeigen:
- Fig. 1: eine schematische Ansicht eines Betriebshofes mit einem eintreffenden Fahrzeug;
- Fig. 2: das Fahrzeug gemäß Fig. 1 in einer Detailansicht; und
- Fig. 3: ein Flussdiagramm des erfindungsgemäßen Verfahrens.

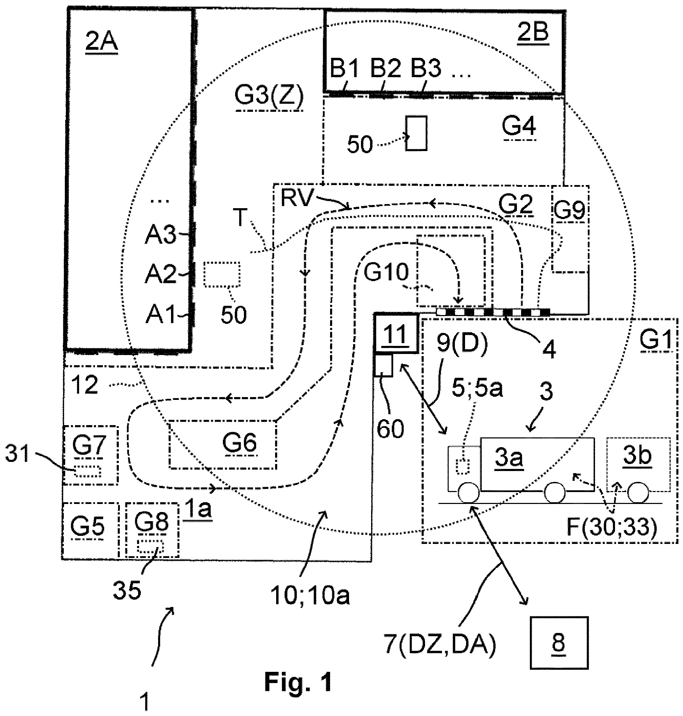

In Figur 1 ist ein Betriebshof 1 dargestellt, der an zwei Gebäuden 2A, 2B jeweils mehrere Rampen Ai, Bi mit i=1, 2, ... zum Beladen und Entladen eines Fahrzeuges 3, insbesondere eines Nutzfahrzeuges, das ein oder mehrteilig (mit Anhänger(n) 3b) sein kann, aufweist. Der Betriebshof 1 ist über einen Zugang 4, beispielsweise ein Tor oder eine Schranke, zugänglich, wobei vor dem Zugang 4 ein Zugangsbereich G1 eingerichtet ist.

Der Betriebshof 1 ist ein abgeschlossener Bereich, für den vorzugsweise eine Zugangsberechtigung erforderlich ist. Ein eintreffendes Fahrzeug 3, beispielsweise ein Zugfahrzeug 3a mit einem Anhänger 3b, kann bei geöffnetem Zugang 4 aus dem Zugangsbereich G1 auf das Gelände 1a des Betriebshofes 1 einfahren und sich z.B. zu einer der Rampen Ai, Bi bewegen, um dort eine zu transportierende Fracht F aufzuladen und/oder eine transportierte Fracht F abzuladen. Das Fahrzeug 3 kann dabei manuell, semiautomatisiert oder voll-automatisiert, d.h. mit einer SAE-Autonomiestufe von mindestens 3, betrieben werden.

Der Betriebshof 1 ermöglicht eine voll-automatisierte oder zumindest semiautomatisierte Abfertigung, wobei dazu auf einen automatisierten Austausch von Daten D mit dem Fahrzeug 3, d.h. mit dem Zugfahrzeug 3a und/oder mit dem Anhänger 3b, zurückgegriffen wird. Durch den automatisierten Austausch der Daten D kann sowohl für einen automatisierten Zugang auf das Gelände 1a des Betriebshofes 1 gesorgt werden als auch für eine Koordination des Fahrzeuges 3 innerhalb des Betriebshofes 1. Grundsätzlich ist aber auch eine manuelle Abfertigung auf dem Betriebshof 1 möglich, wobei dann ebenfalls automatisiert Daten D für den Zugang und für die Koordination auf dem Betriebshof 1 ausgetauscht werden.

Unter Koordination ist dabei zu verstehen, dass das Fahrzeug 3 nach erfolgter Zugangsberechtigung beispielsweise zum korrekten Gebäude 2A, 2B sowie auch zur betreffenden Rampe Ai, Bi geleitet wird. Die Umsetzung erfolgt dann entsprechend manuell oder (teil-)automatisiert. Weiterhin werden dem Fahrzeug 3 Funktionsregeln Ri, mit i=1, 2, ... vorgegeben, die das Verhalten des Fahrzeuges 3 auf dem Gelände 1a des Betriebshofs 1 festlegen. Dadurch wird festgelegt, welche Funktionen mit dem oder durch das Fahrzeug 3 durchgeführt werden dürfen und welche Funktionen verboten sind, wie später noch näher erläutert. All dies dient der Koordination des Fahrzeuges 3 auf dem Betriebshof 1.

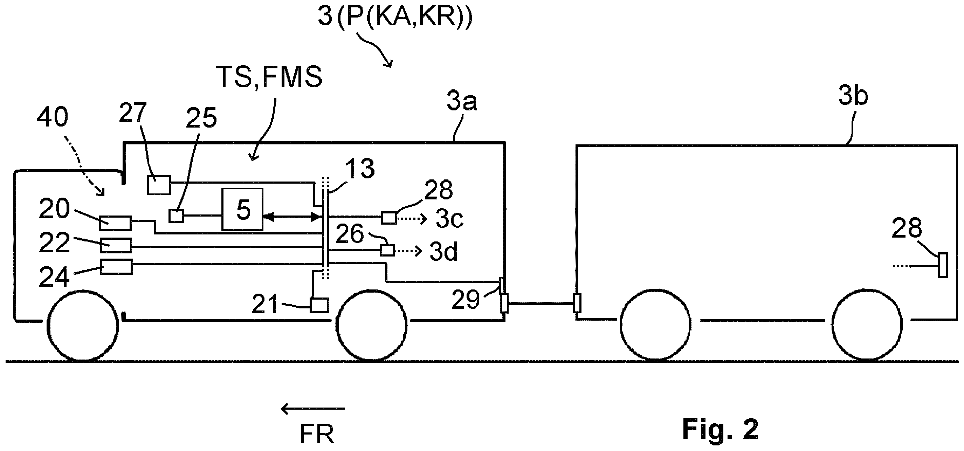

Für den Datenaustausch weist das Fahrzeug 3 gemäß Fig. 2 eine ihm zugeordnete Funktions-Steuereinrichtung 5 auf, die Bestandteil eines Telematiksystems TS, insbesondere eines Flottenmanagementsystems (FMS), sein kann. Die Funktions-Steuereinrichtung 5 kann dazu fest in das Fahrzeug 3, d.h. in das Zugfahrzeug 3a oder in dem Anhänger 3b, eingebaut sein, entweder als Bestandteil einer anderen Baueinheit, beispielsweise eines Bremssystems 20, oder aber als eigenständige Baueinheit. Weiterhin kann die Funktions-Steuereinrichtung 5 aber auch als mobile Funktions-Steuereinrichtung 5a ausgeführt sein. Die mobile Funktions-Steuereinrichtung 5a kann beispielsweise ein Handy, Laptop, Tablet, etc. sein, auf dem die Software des Flottenmanagementsystem FMS als Applikation bzw. Programm installiert ist. Die Funktions-Steuereinrichtung 5 ist dabei in beliebiger Weise an einen Datenbus 13 im Fahrzeug 3 angeschlossen, um für die Koordination des Fahrzeuges 3 auf dem Betriebshof 1 auf weitere Informationen im Fahrzeug 3 zurückgreifen zu können und/oder weitere Fahrzeug-Systeme 40 im Fahrzeug 3 ansteuern zu können.

Die Funktions-Steuereinrichtung 5 ist dabei insbesondere ausgebildet, über ein Zugangsnetzwerk 7 (drahtlos oder drahtgebunden) vorab verschlüsselte Zugangsdaten DZ und ggf. auch erweiterte Authentisierungsdaten DA beispielsweise von einem Programm bzw. einem Server eines Dienstleisters zu erhalten. Diese Zugangsdaten DZ bzw. Authentisierungsdaten DA dienen dem Einwählen in ein stationäres und lokales Netzwerk 10 des Betriebshofes 1. Die Zugangsdaten DZ bzw. Authentisierungsdaten DA können dem Fahrzeug 3 vorab über das Zugangsnetzwerk 7 übermittelt werden, z.B. bevor das Fahrzeug 3 in den Zugangsbereich G1 gelangt.

Die Funktions-Steuereinrichtung 5 im eintreffenden Fahrzeug 3 ist ferner ausgebildet, sich in das stationäre und lokale Netzwerk 10, beispielsweise ein WLAN-Netzwerk 10a, des Betriebshofes 1 automatisiert einzuwählen. Dazu kann die Funktions-Steuereinrichtung 5 eine beliebige drahtlose Datenverbindung 9 mit einem Zentralmodul 11 des stationären lokalen Netzwerks 10 aufbauen. Das Zentralmodul 11 weist dabei einen bestimmten Sende- und Empfangsbereich 12 auf, der den Zugangsbereich G1 des Betriebshofes 1 zumindest teilweise abdeckt.

Der Sende- und Empfangsbereich 12 deckt in Abgrenzung zu einem globalen Netzwerk lediglich ein lokales bzw. begrenztes räumliches Umfeld ab, das hier allenfalls den Bereich des abgegrenzten Betriebshofes 1 beinhaltet. Demnach ist ein Zugang zu dem stationären, lokalen Netzwerk 10 lediglich innerhalb des Sende- und Empfangsbereiches 12 des Zentralmoduls 11 in dem räumlich begrenzten Umfeld und damit aus einer sehr begrenzten Anzahl an Positionen möglich.

Sobald die Funktions-Steuereinrichtung 5 in diesen begrenzten Sende- und Empfangsbereich 12 gelangt, kann die Datenverbindung 9 zwischen dem Zentralmodul 11 und der Funktions-Steuereinrichtung 5 anhand der vorab übermittelten Zugangsdaten DZ bzw. der Authentisierungsdaten DA in beliebiger Weise aufgebaut werden. In Abhängigkeit einer dem Fahrzeug 3 zugeordneten Teilnehmer-Kennung TK, die z.B. in den Zugangsdaten DZ enthalten sein kann, kann das Zentralmodul 11 den Teilnehmer bzw. das betreffende Fahrzeug 3 identifizieren bzw. auch authentisieren. Daraufhin kann das Zentralmodul 11 eine Berechtigung für den Zugang auf das Gelände 1a prüfen und dem Fahrzeug 3 den Zugang sowohl zum stationären, lokalen Netzwerk 10 als auch zum Betriebshof 1 gewähren.

Bei berechtigtem Zugang können nachfolgend bidirektional Daten D zum Koordinieren des Fahrzeuges 3 auf dem Gelände 1a des Betriebshofes 1 über die dann ausgebildete Datenverbindung 9 ausgetauscht werden. Die übermittelten Daten D können dabei abhängig von der Teilnehmer-Kennung TK sein und/oder auch Beladungs-Informationen IB und/oder Entladungs-Informationen IE beinhalten. Aus diesen Angaben (TK, IB, IE) kann beispielsweise die Art des Fahrzeuges 3 und ggf. dessen Auftrag bzw. welche Fracht F das Fahrzeug 3 geladen hat bzw. welche Fracht F auf das Fahrzeug 3 geladen werden soll, ermittelt werden. Aus diesen Angaben (TK, IB, IE) folgt also, in welchen Zielbereich Z sich das Fahrzeug 3 auf dem Betriebshof 1 zu bewegen hat.

Der Zielbereich Z wird dabei ausgewählt aus den Funktionsbereichen Gi, die sich auf dem Betriebshof 1 befinden, wobei gemäß Fig.1 als Zielbereiche Z die folgenden Funktionsbereiche Gi infrage kommen:
- ein erster Gebäudebereich G3 vor dem ersten Gebäude 2A mit den Rampen Ai,
- ein zweiter Gebäudebereich G4 vor dem zweiten Gebäude 2B mit den Rampen Bi,
- ein Ladebereich G5 zum Abladen oder Aufladen von Schüttgut 33,
- ein erster Stellbereich G6 zum Abstellen eines Anhängers 3b oder zum Aufnehmen eines abgestellten Anhängers 3b,
- ein zweiter Stellbereich G7 zum Abstellen eines geladenen Containers 30 auf eine Wechselbrücke 31 oder zum Aufnehmen eines abgestellten Containers 30,
- ein Silobereich G8 zum Aufnehmen von Gut aus einem Silo 35.

Je nach Art des Betriebshofes 1 sind auch weitere Funktionsbereiche Gi als Zielbereiche Z möglich.

Nach der Zuweisung eines Zielbereiches Z wird dem Fahrzeug 3 (Teilnehmer) über die Datenverbindung 9 ein Fahrprofil FP übermittelt, das der Koordination des Fahrzeuges 3 auf dem Betriebshof 1 dient. Das Fahrprofil FP gibt dabei an, über welche Funktionsbereiche Gi das Fahrzeug 3 zu seinem zugewiesenen Zielbereich Z gelangt. Als Funktionsbereiche Gi, die zwischen dem Zugangsbereich G1 und dem jeweiligen Zielbereich Z angefahren werden können, kommen beispielsweise ein Fahrspurbereich G2 oder ein Wartebereich G9 zum temporären Abstellen des Fahrzeuges 3 infrage.

Grundsätzlich sind auch eine feinere Unterteilung oder weitere Funktionsbereiche Gi möglich. Ist beispielsweise genügend Platz auf den Gelände 1a des Betriebshofes 1 verfügbar, können auch mehrere Fahrspurbereiche G2 nebeneinander festgelegt werden, so dass beispielsweise zwei Fahrzeuge 3 parallel zueinander fahren können, ohne dass sich diese gegenseitig behindern.

Wird ausgehend davon der erste Gebäudebereich G3 als Zielbereich Z festgelegt, kann das Fahrprofil FP beispielsweise beinhalten, dass ausgehend vom Zugangsbereich G1 der Fahrspurbereich G2 und anschließend der erste Gebäudebereich G3 zu befahren sind. Ist eine dem Fahrzeug 3 zugewiesene Rampe Ai in dem ersten Gebäudebereich G3 gerade belegt, kann in dem Fahrprofil FP ergänzend vorgegeben werden, dass das Fahrzeug 3 aus dem Zugangsbereich G1 über den Fahrspurbereich G2 zunächst in den Wartebereich G9 zum temporären Abstellen zu fahren ist, um den Zugangsbereich G1 und den Fahrspurbereich G2 nicht zu blockieren. Weiterhin ist in dem Fahrprofil FP festgelegt, dass das Fahrzeug 3 aus dem Wartebereich G9 über den Fahrspurbereich G2 in den ersten Gebäudebereich G3 bzw. den Zielbereich Z zu fahren ist, wenn die zugewiesene Rampe Ai im ersten Gebäudebereich G4 wieder frei bzw. nicht mehr belegt ist.

Auf diese Weise wird dem Fahrzeug 3 über das Fahrprofil FP eine Art Ablaufplan übermittelt, in welchen Funktionsbereichen Gi sich das Fahrzeug 3 aufzuhalten hat. Dieser Ablaufplan gilt dabei sowohl für eine manuelle Fahrt als auch für eine voll-automatisierte Fahrt auf dem Betriebshof 1.

Zusätzlich wird in dem jeweiligen Fahrprofil FP auch festgelegt, welche noch näher zu erläuterten Funktionsregeln Ri in den jeweiligen Funktionsbereichen Gi des Betriebshofes 1 einzuhalten sind, d.h. wie sich das Fahrzeug 3 in den jeweiligen Funktionsbereichen Gi zu verhalten hat. Die einzelnen Funktionsregeln Ri können dabei in Form von Verboten oder in Form einer Erlaubnis formuliert sein. Dem Fahrzeug 3 werden also über das übermittelte Fahrprofil FP gleichzeitig auch positionsbezogene Regeln mitgegeben, die es auf dem Weg vom Zugangsbereich G1 zum Zielbereich Z bzw. allgemein auf dem Gelände 1a des Betriebshofes 1 einzuhalten hat. Diese positionsbezogenen Funktionsregeln Ri gelten dabei sowohl für eine manuelle Fahrt als auch für eine voll-automatisierte Fahrt.

Zum Bereitstellen eines derartigen Fahrprofils FP wird der Betriebshof 1 zunächst kartographiert und in unterschiedliche Gebiete bzw. in die Funktionsbereiche Gi, mit i = 1, 2, n ... eingeteilt. Jeder Funktionsbereich Gi kann dabei durch absolute Koordinaten KA oder relative Koordinaten KR beschrieben werden, die z.B. auf dem virtuellen Rand oder der virtuellen Begrenzung des jeweiligen Funktionsbereiches Gi liegen. Ergänzend können auch Orientierungslinien auf dem Untergrund aufgebracht sein. Auf diese Weise kann das Fahrzeug 3 über ein Positionserfassungssystem 25, z.B. GPS, GLONASS, Beidoou, Galileo, etc., oder per Odometrie O ständig ermitteln, in welchem Funktionsbereich Gi es sich gerade befindet. Die Orientierungslinien können dabei als zusätzliche Orientierung dienen, die bei einer manuellen Fahrt vom Fahrer oder bei einer automatisierten Fahrt über ein Umgebungserfassungssystem 27 wahrgenommen werden können.

Die Funktionsregeln Ri werden ausgehend davon beispielsweise wie folgt festgelegt:
Der kartographierte Fahrspurbereich G2 ist dazu vorgesehen, ein vom Zugangsbereich G1 kommendes Fahrzeug 3 zum jeweiligen Zielbereich Z bzw. Funktionsbereich Gi (mit i >2) zu leiten. Gleichzeitig führt der Fahrspurbereich G2 aber auch zu einem Ausgangsbereich G10, so dass das Fahrzeug 3 den Betriebshof 1 nach dem Erfüllen seiner Aufgaben (Beladen, Entladen, etc.) über den Fahrspurbereich G2 auch wieder verlassen kann. Der Fahrspurbereich G2 ist dabei beispielsweise eine Art Fahrschlauch, innerhalb dessen sich das Fahrzeug 3 mit gewissen Einschränkungen, die in Fahrspur-Funktionsregeln R2 zusammengefasst sind, frei bewegen darf.

Um Gegenverkehr zu vermeiden, ist der Fahrspurbereich G2 als Einbahnstraße ausgeführt. Dazu beinhaltet die Fahrspur-Funktionsregel R2, dass sich das Fahrzeug 3 im Fahrspurbereich G2 nicht entgegen einer Vorwärtsrichtung RV bewegen darf, wobei die Vorwärtsrichtung RV innerhalb des Fahrspurbereiches G2 vom Zugangsbereich G1 zum Ausgangsbereich G10 verläuft, wie in Fig. 1 gestrichelt dargestellt. Das Fahrzeug 3 hat also im Fahrspurbereich G2 insbesondere ein Rückwärtsfahr-Verbot VR und/oder ein Wende-Verbot VW, da dazu eine Fahrtrichtung FR des Fahrzeuges 3 entgegen der Vorwärtsrichtung RV orientiert wäre.

Ergänzend kann die Fahrspur-Funktionsregel R2 eine Vorfahrt-Anweisung AV beinhalten. Diese legt beispielsweise fest, dass andere Fahrzeuge 50 auf dem Betriebshof 1, die den Fahrspurbereich G2 kreuzen oder in diesen teilweise hineinragen Vorfahrt haben. Das im Fahrspurbereich G2 befindliche Fahrzeug 3, das sich zu seinem Zielbereich Z bewegt, hat demnach auf andere Fahrzeuge 50 im Fahrspurbereich G2 immer Rücksicht zu nehmen, insbesondere zu warten, bis eine ungehinderte Weiterfahrt in die Vorwärtsrichtung RV im Fahrspurbereich G2 möglich ist, oder das andere Fahrzeug 50 innerhalb des Fahrspurbereiches G2 unter Beachtung der Fahrspur-Funktionsregel R2 zu umfahren. Ein Erkennen von anderen Fahrzeugen 50 im Fahrspurbereich G2 kann dabei beispielsweise mithilfe des Umgebungserfassungssystems 27 erfolgen. Es ist aber auch eine drahtlose Kommunikation zwischen den beiden Fahrzeugen 3, 50 zur Abstimmung möglich.

Abgestimmt auf die Vorfahrts-Anweisung AV für den Fahrspurbereich G2 kann auch eine Vorfahrts-Anweisung AV für den ersten und den zweiten Gebäudebereich G3, G4 existieren, wobei diese dann in den entsprechend zugeordneten Gebäude-Funktionsregeln R3, R4 enthalten sind. Die Vorfahrts-Anweisungen AV für die Gebäudebereiche G3, G4 legen beispielsweise fest, dass ein in den Gebäudebereichen G3, G4 befindliches Fahrzeug 3 in den Fahrspurbereich G2 hineinragen dürfen, beispielsweise beim Rangieren an der jeweilige Rampe Ai, Bi. Auch ein Kreuzen des Fahrspurbereiches G2 oder ein Einfahren in den Fahrspurbereich G2, um beispielsweise zum Ausgangsbereich G10 zu kommen, kann entsprechend der Vorfahrts-Anweisung AV mit Vorrang vor Fahrzeugen 3 im Fahrspurbereich G2 erfolgen.

Auch andere Funktionsbereiche Gi können derartige Vorfahrts-Anweisungen AV in ihren jeweils zugeordneten Funktionsregeln Ri aufweisen. Beispielsweise kann eine Warte-Funktionsregel R9 für den Wartebereich G9 eine Vorfahrts-Anweisung AV aufweisen, die ein Einfahren eines Fahrzeuges 3 in den Fahrspurbereich G2 aus dem Wartebereich G9 mit Vorrang vor anderen Fahrzeugen 50 im Fahrspurbereich G2 erlaubt. Die Vorfahrts-Anweisungen AV unterschiedlicher Funktionsbereiche Gi sind dann entsprechend aufeinander abzustimmen.

Weiterhin kann die dem Fahrspurbereich G2 zugeordnete Fahrspur-Funktionsregel R2 beinhalten, dass ein Öffnen von Türen 3c des Fahrzeuges 3 verboten ist (Türöffnungs-Verbot VT) und/oder auch ein (manuelles oder automatisiertes) Abkoppeln eines Anhängers 3b verboten ist (Abkoppel-Verbot VA). Zudem kann in der Fahrspur-Funktionsregel R2 auch festgelegt sein, mit welcher Maximal-Geschwindigkeit vMax sich das Fahrzeug 3 im Fahrspurbereich G2 bewegen darf. Dies kann auch positionsabhängig erfolgen. Befindet sich das Fahrzeug 3 beispielsweise auf einer Geraden im Fahrspurbereich G2 kann eine höhere Maximalgeschwindigkeit vMax zugelassen sein als in einer Kurve oder nahe einer Einfahrt. Auch das Abladen einer Fracht F (Schüttgut 33, Container 30, etc.) kann für den Fahrspurbereich G2 verboten sein (Ablade-Verbot VF), was beispielsweise dadurch umgesetzt werden kann, dass ein Ankippen einer Ladefläche 3d des Anhängers 3b und/oder des Zugfahrzeuges 3a verhindert wird oder ein Absenken des Fahrzeuges 3 durch ein aktives Niveauregelsystem 21 (Luftfederung, ECAS) zum Abstellen des Containers 30 auf einer Wechselbrücke 31 verhindert wird.

Auf diese Weise können für jeden Funktionsbereich Gi andere Verbote oder Erlaubnisse in den Funktionsregeln Ri festgelegt werden, wobei dies in Abhängigkeit des Nutzens des jeweiligen Verbots oder der jeweiligen Erlaubnis erfolgt. So kann in den Gebäudebereichen G3, G4 ein (manuelles oder automatisiertes) Abkoppel-Verbot VA sinnvoll sein, ein Rückwärtsfahr-Verbot VR jedoch eher nicht, da das Fahrzeug 3 in den Gebäudebereichen G3, G4 an die jeweilige Rampe Ai, Bi rangieren muss. Dementsprechend ist ein Verbot im Hinblick auf eine bestimmte Fahrtrichtung des Fahrzeuges 3 ohne großen Nutzen. Allenfalls die Maximalgeschwindigkeit vMax kann in den Gebäude-Funktionsregeln R3, R4 festgelegt sein. Je nach Fracht F kann auch ein Türöffnungs-Verbot VT in den Gebäudebereichen G3, G4 sinnvoll sein, wenn der Zugang zur jeweiligen Fracht F eingeschränkt werden soll.

Im Ladebereich G5 kann in Lade-Funktionsregeln R5 ein Abkoppel-Verbot VA und/oder ein Türöffnungs-Verbot VT vorgesehen sein, aber kein Rückwärtsfahr-Verbot VR und auch kein Ablade-Verbot VF, um das Rangieren und Abladen von z.B. Schüttgut 33 zu ermöglichen. Auch die Maximal-Geschwindigkeit vMax kann für den Ladebereich G5 in den Lade-Funktionsregeln R5 festgelegt sein.

In dem ersten Stellbereich G6, der dem Abstellen oder Aufnehmen eines Anhängers 3b dient, kann ein Ablade-Verbot VF und/oder ein Türöffnungs-Verbot VT in den zugeordneten ersten Stell-Funktionsregeln R6 vorliegen, ein (manuelles oder automatisiertes) Abkoppel-Verbot VA und ein Rückwärtsfahr-Verbot VR ist jedoch aufgehoben, um ein Rangieren und An- bzw. Abkoppeln zu ermöglichen. Auch die Maximal-Geschwindigkeit vMax kann für den ersten Stellbereich G6 in den ersten Stell-Funktionsregeln R6 festgelegt sein.

Im zweiten Stellbereich G7 hingegen, der dem Abstellen oder Aufnehmen eines Containers 30 auf bzw. von eine(r) Wechselbrücke 31 dient, können in den entsprechend zugeordneten zweiten Stell-Funktionsregeln R7 ein Absenken des Fahrwerks des Fahrzeuges 3 z.B. durch Ansteuerung eines aktiven Niveauregelsystems 21 (ECAS) sowie auch eine Rückwärtsfahrt erlaubt sein, um das Abladen oder Aufnehmen des Containers 30 auf die bzw. von der Wechselbrücke 31 zu ermöglichen. Ein Abkoppel-Verbot VA und ein Türöffnungs-Verbot VT können jedoch vorliegen. Auch die Maximal-Geschwindigkeit vMax kann für den zweiten Stellbereich G7 in den zweiten Stell-Funktionsregeln R7 festgelegt sein.

Im Silobereich G8 kann ferner in Silo-Funktionsregeln R8 ein (manuelles oder automatisiertes) Abkoppel-Verbot VA und/oder ein Ablade-Verbot VF und/oder ein Türöffnungs-Verbot VT vorliegen, während das Rückwärtsfahr-Verbot VR aufgehoben ist, um ein Rangieren zum Silo 35 zu ermöglichen.

Für den Wartebereich G9 können je nach Aufbau des Betriebshofes 1 das Ablade-Verbot VF und/oder das Türöffnungs-Verbot VT und/oder das Abkoppel-Verbot VA in den Warte-Funktionsregeln R9 vorhanden sein.

Für den Zugangsbereich G1 und den Ausgangsbereich G10 können Zugangs-Funktionsregeln R1 bzw. Ausgangs-Funktionsregeln R10 festgelegt werden, die den Fahrspur-Funktionsregeln R2 ähnlich sind. Weiterhin kann für den Zugangsbereich G1 und den Ausgangsbereich G10 eine Übergabefunktion UF vorgesehen sein, die angibt, dass die Kontrolle beim Zugang auf den Betriebshof 1 zumindest teilweise abgegeben wird, um die Funktionsregeln Ri umzusetzen bzw. dass die volle Kontrolle beim Verlassen des Betriebshofes 1 wieder an den Fahrer bzw. das autonome Fahrzeug 3 übergeben wird.

Für weitere Funktionsbereiche Gi können entsprechend weitere Funktionsregeln Ri festgelegt werden. Zudem sind die bisher genannten Funktionsregeln Ri für den jeweiligen Funktionsbereich Gi lediglich beispielhaft und nicht abschließend.

Um die Funktionsregeln Ri in den einzelnen Funktionsbereichen Gi umzusetzen und das Fahrzeug 3 dementsprechend auf dem Betriebshof 1 koordinieren zu können, ist die Funktions-Steuereinrichtung 5 ausgebildet, das Bremssystem 20 und/oder ein Antriebssystem 22 und/oder ein Lenksystem 24 anzusteuern. Dadurch kann eine automatisiert oder manuell angeforderte Fahrdynamik des Fahrzeuges 3 durch Betätigen oder Freigeben der jeweiligen Aktoren (Bremse, Antrieb, Lenkung) beliebig beeinflusst werden. Die Funktions-Steuereinrichtung 5 kann dabei in eines der Fahrzeug-Systeme 40; 20, 22, 24 integriert sein oder aber mit den jeweiligen Fahrzeug-System 40; 20, 22, 24 signalleitend verbunden sein, beispielsweise über einen Datenbus 13, beispielsweise CAN-Datenbus. Darüber können beispielsweise das Rückwärtsfahr-Verbot VR oder das Wende-Verbot VW umgesetzt oder aufgehoben werden, indem ein entsprechender automatisierter oder manueller Eingriff in die Lenkung und/oder den Antrieb verhindert bzw. erlaubt wird. Gleichzeitig kann durch eine entsprechende Ansteuerung des Antriebssystems 22 und/oder des Bremssystems 20 für ein Einhalten der Maximalgeschwindigkeit vMax gesorgt werden.

Weiterhin kann die Funktions-Steuereinrichtung 5 ein Türsystem 28 zum Verriegeln oder Entriegeln der Tür(en) 3c des Fahrzeuges 3 (Zugfahrzeug 3a und/oder Anhänger 3b), ein Kopplungssystem 29 zum (manuellen oder automatisierten) Fixieren des Anhängers 3b am Zugfahrzeug 3a und ein Abladesystem 26 zum Ankippen einer Ladefläche 3d des Anhängers 3b und/oder des Zugfahrzeuges 3a ansteuern, um das jeweilige Verbot VT, VA, VF umzusetzen bzw. aufzuheben. Auch eine Ansteuerung eines aktiven Niveauregelsystems 21 (ECAS) ist möglich, um den Fahrzeugaufbau anheben und absenken zu können.

Außerdem ist die Funktions-Steuereinrichtung 5 mit dem Positionserfassungssystem 25 signalleitend verbunden. Dadurch kann die aktuelle Position P des Fahrzeuges 3 auf dem Betriebshof 1 in absoluten Koordinaten KA oder in relativen Koordinaten KR ermittelt werden. Ergänzend können auch Daten auf die Funktions-Steuereinrichtung 5 übertragen werden, die eine Positionserfassung per Odometrie O ermöglichen, z.B. über den Datenbus 13. Aus der jeweils ermittelten Position P kann über das vorher empfangene Fahrprofil FP der Funktionsbereich Gi ermittelt werden, in dem sich das Fahrzeug 3 aktuell gerade befindet. Aus dem Fahrprofil FP kann dann aus der jeweiligen Zuordnung automatisch die für das Fahrzeug 3 aktuell gültige Funktionsregel Ri eingelesen werden. Die Funktionsregeln Ri sind dabei auf der Funktions-Steuereinrichtung 5 gespeichert, z.B. in einer Bibliothek, so dass es ausreichend ist, dem Fahrzeug 3 bzw. der Funktions-Steuereinrichtung 5 über das Fahrprofil FP eine Bezeichnung der jeweiligen Funktionsregel Ri mitzuteilen. Die Bibliothek auf der Funktions-Steuereinrichtung 5 ist dazu in beliebiger Weise vorab mit der Bibliothek des Betriebshofes 1 zu synchronisieren.

Weiterhin kann in Abhängigkeit des Fahrprofils FP bzw. der darin enthaltenen Funktionsbereiche Gi und in Abstimmung mit der aktuellen Position P des Fahrzeuges 3 eine Bahnplanung erfolgen, beispielsweise in Form einer Trajektorie T. Diese gibt an, wie sich das Fahrzeug 3 über die jeweiligen Funktionsbereiche Gi hinweg zum Zielbereich Z und ggf. auch innerhalb der jeweiligen Funktionsbereiches Gi unter Beachtung der jeweils gültigen Funktionsregeln Ri am sinnvollsten bewegen sollte. Anhand dieser Bahnplanung kann beispielsweise eine automatisierte Ansteuerung des Bremssystems 20 und/oder des Antriebssystems 22 und/oder des Lenksystems 24 erfolgen, um das Fahrzeug 3 (teil-)automatisiert durch die verschiedenen Funktionsbereiche Gi zum Zielbereich Z zu führen. Ergänzend kann die Funktions-Steuereinrichtung 5 dabei auf Informationen des Umgebungserfassungssystems 27 zurückgreifen, mit dem die Funktions-Steuereinrichtung 5 signalleitend verbunden ist.

Im Unterschied zum Stand der Technik wird diese Trajektorie T dabei nicht vom Zentralmodul 11 vorgegeben, sondern von der Funktions-Steuereinrichtung 5 selbst unter Beachtung der Funktionsregeln Ri situationsbedingt erstellt, so dass das Fahrzeug 3 selbst frei über den Fahrtverlauf entscheiden kann. Ein starres Abfahren einer von extern fest vorgegebenen Trajektorie T ist daher gerade nicht vorgesehen. Vielmehr kann das Fahrzeug 3 selbst situationsbedingt und unter Berücksichtigung der Funktionsregeln Ri von der erstellten Trajektorie T auch abweichen bzw. diese entsprechend anpassen.

Bei einer manuellen Steuerung des Fahrzeuges 3 kann dem Fahrer die Bahnplanung bzw. die Trajektorie T, die über die jeweiligen Funktionsbereiche Gi zum Zielbereich Z verläuft, auch angezeigt werden. Folgt der Fahrer dieser Trajektorie T, so wird er z.B. automatisch das Wende-Verbot VW oder das Rückwärtsfahr-Verbot im Fahrspurbereich G2 einhalten, da die Bahnplanung anhand dieser Vorgaben erfolgt. Folgt der Fahrer der Trajektorie T nicht, so erfolgt eine automatische Ansteuerung des jeweiligen Fahrzeug-Systems 40; 20, 22, 24 durch die Funktions-Steuereinrichtung 5 dann, wenn dadurch das Fahrprofil FP bzw. die Funktionsregeln Ri nicht mehr eingehalten werden. In dem Fall erfolgt eine automatisierte Ansteuerung des jeweiligen Fahrzeug-Systems 40 derartig, dass sowohl die positionsbezogenen Funktionsregeln Fi eingehalten werden als auch ein Verlassen der festgelegten Funktionsbereiche Gi unterbunden wird, beispielsweise durch ein Abbremsen des Fahrzeuges 3. Wird das Fahrzeug 3 zudem zu schnell bzw. wird die Maximalgeschwindigkeit vMax überschritten, wird das Fahrzeug 3 durch die Funktions-Steuereinrichtung 5 automatisiert abgebremst.

Ergänzend kann für den manuellen oder den (teil-)automatisierten Betrieb des Fahrzeuges 3 auf dem Betriebshof 1 eine Notfall-Funktion N vorgesehen sein. Diese greift ein, wenn sich das Fahrzeug 3 im jeweiligen Funktionsbereich Gi an einer Position P befindet, aus der sich das Fahrzeug 3 durch eine Ansteuerung des Bremssystems 20 und/oder des Antriebssystems 22 und/oder des Lenksystems 24 nicht befreien kann, ohne sich an das Fahrprofil FP bzw. die jeweils gültige Funktionsregel Ri zu halten. In dem Fall können durch eine entsprechende Freischaltung die Funktionsregeln Ri bzw. jegliche Verbote aufgehoben werden. Dies kann insbesondere auch bei einem Notfall auf dem Betriebshof 1 der Fall sein. In solchen Fällen kann die Ansteuerung des Fahrzeuges 3 auch durch einen Teleoperator 60 aus der Ferne übernommen werden.

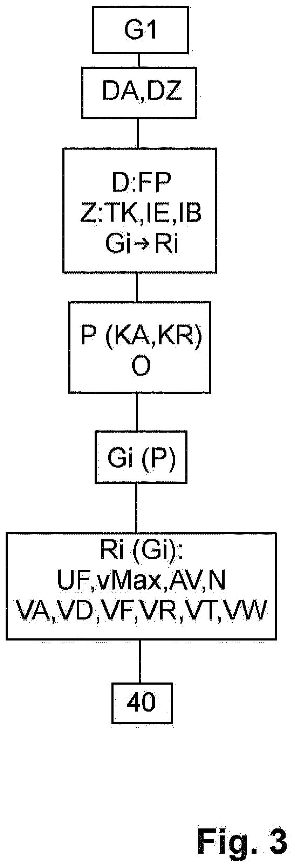

Gemäß Fig. 3 kann das erfindungsgemäße Verfahren beispielsweise wie folgt durchgeführt werden:
Bei einer Ankunft am Betriebshof 1 bzw. nach dem Befahren des Zugangsbereiches G1 (Schritt ST0) wird in einem ersten Schritt ST1 der Zugang anhand der Zugangsdaten DZ bzw. der Authentisierungsdaten DA geprüft. Wurde ein Zugang zum Betriebshof 1 und auch zum lokalen Netzwerk 10 gewährt, wird dem Fahrzeug 3 in einem zweiten Schritt ST2 über die dann ausgebildete Datenverbindung 9 das für das Fahrzeug 3 bereitgestellte Fahrprofil FP mit den Funktionsbereichen Gi und den diesen zugeordneten Funktionsregeln Ri übermittelt, wobei das Fahrprofil FP gleichzeitig auch den zugeordneten Zielbereich Z enthält. Aus dem Zugangsbereich G1 kann sich das Fahrzeug 3 anschließend auf das Gelände 1a des Betriebshofes 1 bewegen, wobei die Bedingungen dafür in den Zugangs-Funktionsregeln R1, die dem Zugangsbereich G1 zugeordnet sind, entsprechend festgelegt sein können.

In einem dritten Schritt ST3 erfolgt dann fortlaufend das Ermitteln der Position P des Fahrzeuges 3 über das Positionserfassungssystem 25 im Fahrzeug 3. In einem vierten Schritt ST4 wird aus dem Fahrprofil FP der Funktionsbereich Gi bestimmt, der der ermittelten Position P zugeordnet ist. In einem fünften Schritt ST5 wird aus dem Fahrprofil FP die Funktionsregel Ri, die dem bestimmten Funktionsbereich Gi zugeordnet ist, eingelesen. In Abhängigkeit der eingelesen Funktionsregel Ri wird in einem sechsten Schritt ST6 das jeweilige Fahrzeug-System 40; 20, 21, 22, 24, 26, 28, 30 im Fahrzeug 3 derartig angesteuert, dass die Funktionsregel Ri im aktuellen Funktionsbereich Gi umgesetzt wird.

Die Schritte ST3 bis ST6 werden dabei fortlaufend durchgeführt, während sich die Position P des Fahrzeuges 3 durch eine manuelle oder automatisierte Ansteuerung des Bremssystems 20 und/oder des Antriebssystems 22 und/oder des Lenksystems 24 in Richtung des Zielbereiches Z verändert. Die Bewegung des Fahrzeuges 3 auf dem Betriebshof 1 kann dabei anhand einer aus dem Fahrprofil FP folgenden Bahnplanung bzw. einer Trajektorie T, die vom Zugangsbereich G1 durch die jeweiligen Funktionsbereiche Gi in den Zielbereich Z und anschließend in den Ausgangsbereich G10 führt, erfolgen.

### Bezugszeichenliste (Teil der Beschreibung)

- 1: Betriebshof
- 1a: Gelände des Betriebshofes 1
- 2A, 2B: Gebäude
- 3: Fahrzeug
- 3a: Zugfahrzeug
- 3b: Anhänger
- 3c: Türen des Fahrzeuges 3
- 3d: Ladefläche
- 4: Zugang
- 5: Funktions-Steuereinrichtung
- 5a: mobile Funktions-Steuereinrichtung
- 7: Zugangsnetzwerk
- 9: Datenverbindung
- 10: lokales Netzwerk
- 10a: WLAN-Netzwerk
- 11: Zentralmodul
- 12: Sende- und Empfangsbereich
- 13: Datenbus
- 20: Bremssystem
- 21: Niveauregelsystem
- 22: Antriebssystem
- 24: Lenksystem
- 25: Positionserfassungssystem
- 26: Abladesystem
- 27: Umgebungserfassungssystem
- 28: Türsystem
- 29: Kopplungssystem
- 30: Container
- 31: Wechselbrücke
- 33: Schüttgut
- 35: Silo
- 40: Fahrzeug-System
- 50: anderes Fahrzeug
- 60: Teleoperator
- Ai, Bi: Rampe an den Gebäuden 2A, 2B
- AV: Vorfahrt-Anweisung
- D: Daten
- DA: Authentisierungsdaten
- DZ: Zugangsdaten
- F: Fracht
- FMS: Flottenmanagementsystem
- FP: Fahrtprofil
- FR: Fahrtrichtung des Fahrzeuges 3
- Gi: Bereiche
- G1: Zugangsbereich
- G2: Fahrspurbereich
- G3: erster Gebäudebereich
- G4: zweiter Gebäudebereich
- G5: Ladebereich
- G6: erster Stellbereich
- G7: zweiter Stellbereich
- G8: Silobereich
- G9: Wartebereich
- G10: Ausgangsbereich
- KA: absolute Koordinaten
- KR: relative Koordinaten
- N: Notfall-Funktion
- O: Odometrie
- P: Position
- Ri: Funktionsregeln
- R1: Zugangs-Funktionsregel
- R2: Fahrspur-Funktionsregel
- R3: erste Gebäude-Funktionsregel
- R4: zweite Gebäude-Funktionsregel
- R5: Lade-Funktionsregel
- R6: erste Stell-Funktionsregel
- R7: zweite Stell-Funktionsregel
- R8: Silo-Funktionsregel
- R9: Warte-Funktionsregel
- R10: Ausgangs-Funktionsregel
- RV: Vorwärtsrichtung
- T: Trajektorie
- TK: Teilnehmer-Kennung
- TS: Telematiksystem
- UF: Übergabefunktion
- VA: Abkoppel-Verbot
- VD: Fahr-Verbot
- VF: Ablade-Verbot
- VR: Rückwärtsfahr-Verbot
- VT: Türöffnungs-Verbot
- VW: Wende-Verbot
- vMax: Maximalgeschwindigkeit
- Z: Zielbereich

- ST1, ST2, ST3, ST4, ST5, ST6: Schritte des Verfahrens

## Patentansprüche

1. Verfahren zum Koordinieren eines Fahrzeuges (3), insbesondere eines Nutzfahrzeuges (3), auf einem Betriebshof (1), wobei der Betriebshof (1) in mehrere Funktionsbereiche (Gi) unterteilt ist, wobei das Fahrzeug (3) auf dem Betriebshof (1) durch zumindest einige der Funktionsbereiche (Gi) in einen festgelegten Zielbereich (Z) gesteuert wird, mit mindestens den folgenden Schritten:
- Empfangen eines Fahrprofils (FP), wobei das Fahrprofil (FP) mindestens eine Funktionsregel (Ri) beinhaltet, wobei jede Funktionsregel (Ri) einem Funktionsbereich (Gi) auf dem Betriebshof (1) zugeordnet ist und die Funktionsregel (Ri) festlegt, wie das Fahrzeug (3) auf dem Betriebshof (1) in dem jeweils zugeordneten Funktionsbereich (Gi) angesteuert wird und/oder nicht angesteuert werden darf (ST2);
- während das Fahrzeug (3) durch zumindest einige der Funktionsbereiche (Gi) in den Zielbereich (Z) gesteuert wird:
-- fortlaufendes Ermitteln einer Position (P) des Fahrzeuges (3) auf dem Betriebshof (1) (ST3);
-- Ermitteln des Funktionsbereiches (Gi), der der aktuell ermittelten Position (P) des Fahrzeuges (3) zugeordnet ist, aus dem empfangenen Fahrprofil (FP) (ST4);
-- Einlesen der Funktionsregel (Ri), die dem ermittelten Funktionsbereich (Gi) zugeordnet ist, aus dem empfangenen Fahrprofil (FP) (ST5); und
-- Ansteuern des Fahrzeuges (3) in Abhängigkeit der eingelesen Funktionsregel (Ri) derartig, dass die Funktionsregel (Ri) im aktuell durchfahrenen Funktionsbereich (Gi) umgesetzt wird (ST6).

2. Verfahren nach Anspruch 1, **dadurch gekennzeichnet, dass** das Fahrprofil (FP) dem Fahrzeug (3) zugeordnet ist und das Fahrprofil (FP) über ein lokales Netzwerk (10), beispielsweise eine WLAN-Netzwerk (10a) des Betriebshofes (1), bereitgestellt wird.

3. Verfahren nach Anspruch 2, **dadurch gekennzeichnet, dass** sich das Fahrzeug (3) über Zugangsdaten (DZ) und/oder Authentisierungsdaten (DA) in das lokale Netzwerk (10) einwählt, um Zugang zum lokalen Netzwerk (10) sowie auf ein Gelände (1a) des Betriebshofes (1) zum Befahren der Funktionsbereiche (Gi) zu erhalten.

4. Verfahren nach einem der vorhergehenden Ansprüche, **dadurch gekennzeichnet, dass** das Fahrzeug (3) auf dem Betriebshof (1) von einem Zugangs-Bereich (G1) zu einem dem Fahrzeug (3) zugeordneten Zielbereich (Z) gesteuert wird, wobei die Funktionsbereiche (Gi) auf dem Weg vom Zugangs-Bereich (G1) zum Zielbereich (Z) durchfahren werden.

5. Verfahren nach Anspruch 4, **dadurch gekennzeichnet, dass** der Zielbereich (Z) in Abhängigkeit einer geladenen oder aufzuladenden Fracht (F) und/oder in Abhängigkeit einer dem Fahrzeug (3) zugeordneten Teilnehmer-Kennung (TK) festgelegt wird.

6. Verfahren nach einem der vorhergehenden Ansprüche, **dadurch gekennzeichnet, dass** die Funktionsregeln (Ri) der einzelnen Funktionsbereiche (Gi) derartig in dem Fahrprofil (FP) festgelegt sind, dass das Fahrzeug (3) auf dem Betriebshof (1) lediglich durch die Funktionsbereiche (Gi) gesteuert wird und/oder gesteuert werden darf, die zum Erreichen des Zielbereiches (Z) nötig sind und/oder die zum Erreichen des Zielbereiches (Z) zugelassen sind.

7. Verfahren nach einem der vorhergehenden Ansprüche, **dadurch gekennzeichnet, dass** das Fahrzeug (3) auf dem Betriebshof (1) manuell oder automatisiert durch zumindest einige der Funktionsbereiche (Gi) gesteuert wird.

8. Verfahren nach einem der vorhergehenden Ansprüche, **dadurch gekennzeichnet, dass** die eingelesene Funktionsregel (Ri) für den jeweiligen Funktionsbereich (Gi) umgesetzt wird, indem mindestens ein Fahrzeug-System (40) des Fahrzeuges (3) angesteuert wird und/oder eine Ansteuerung mindestens eines Fahrzeug-Systems (40) eingeschränkt wird und/oder verhindert wird.

9. Verfahren nach Anspruch 8, **dadurch gekennzeichnet, dass** das Fahrzeug-System (40) ein Bremssystem (20) und/oder ein Antriebssystem (22) und/oder ein Lenksystem (24) des Fahrzeuges (3) ist, dessen Ansteuerung zugelassen oder eingeschränkt oder verhindert werden kann, um die Funktionsregel (Ri) in dem jeweiligen Funktionsbereich (Gi) umzusetzen.

10. Verfahren nach Anspruch 8 oder 9, **dadurch gekennzeichnet, dass** das Fahrzeug-System (40) ein Niveauregelsystem (21) und/oder eine Abladesystem (26) und/oder ein Türsystem (28) und/oder ein Kopplungssystem (29) ist, dessen Ansteuerung zugelassen oder eingeschränkt oder verhindert werden kann, um die Funktionsregel (Ri) in dem jeweiligen Funktionsbereich (Gi) umzusetzen.

11. Verfahren nach einem der vorhergehenden Ansprüche, **dadurch gekennzeichnet, dass** die Funktionsregel (Ri) in dem jeweiligen Funktionsbereich (Gi) mindestens ein Verbot aufweist, das ausgewählt ist aus der Gruppe bestehend aus:
einem Abkoppel-Verbot (VA), einem Fahr-Verbot (VD), einem Ablade-Verbot (VF), einem Rückwärtsfahr-Verbot (VR), einem Türöffnungs-Verbot (VT), einem Wende-Verbot (VW).

12. Verfahren nach einem der vorhergehenden Ansprüche, **dadurch gekennzeichnet, dass** die Funktionsregel (Ri) in dem jeweiligen Funktionsbereich (Gi) eine Vorfahrt-Anweisung (AV) und/oder eine einzuhaltende Maximalgeschwindigkeit (vMax) aufweist.

13. Verfahren nach einem der vorhergehenden Ansprüche, **dadurch gekennzeichnet, dass** die mehreren Funktionsbereiche (Gi) auf dem Betriebshof (3) Bereiche sind, die ausgewählt sind aus der Gruppe bestehend aus: einem Zugangsbereich (G1), einem Fahrspurbereich (G2), mindestens einem Gebäudebereich (G3, G4) mit jeweils einem Gebäude (2A, 2B) und mit Rampen (Ai, Bi), einem zweiten Gebäudebereich (G4) mit einem Gebäude (2B) und mit Rampen (Bi), einem Ladebereich (G5), einem ersten Stellbereich (G6) zum Abstellen eines Anhängers (3b), einem zweiten Stellbereich (G7) zum Abstellen eines Containers (30) auf einer Wechselbrücke (31), einem Silobereich (G8), einem Wartebereich (G9), einem Ausgangsbereich (G10).

14. Verfahren nach einem der vorhergehenden Ansprüche, **dadurch gekennzeichnet, dass** die fortlaufende Ermittlung der Position (P) des Fahrzeuges (3) durch Ermittlung von absoluten Koordinaten (KA) und/oder relativen Koordinaten (KR) des Fahrzeuges (3) auf dem Betriebshof (1) erfolgt, beispielsweise über ein Positionserfassungssystem (25) und/oder durch Odometrie (O), wobei auch die einzelnen Funktionsbereiche (Gi) durch absolute Koordinaten (KA) und/oder relative Koordinaten (KR) festgelegt sind.

15. Verfahren nach einem der vorhergehenden Ansprüche, **dadurch gekennzeichnet, dass** das Fahrzeug (3) anhand einer geplanten Trajektorie (T) durch die zumindest einigen Funktionsbereiche (Gi) auf dem Betriebshof (1) gesteuert wird, wobei die Trajektorie (T) in Abhängigkeit der eingelesenen Funktionsregeln (Ri) und/oder des übermittelten Fahrprofils (FP) geplant wird, vorzugsweise im Fahrzeug (3) selbst.

16. Verfahren nach einem der vorhergehenden Ansprüche, **dadurch gekennzeichnet, dass** eine Notfall-Funktion (N) vorgesehen ist, wobei das Fahrzeug (3) bei Aktivieren der Notfall-Funktion (N) unabhängig von den vorgegebenen Funktionsregeln (Ri) und/oder des übermittelten Fahrprofils (FP) in dem jeweiligen Funktionsbereich (Gi) gesteuert wird, vorzugsweise durch einen Teleoperator (60).

17. Verfahren nach Anspruch 16, **dadurch gekennzeichnet, dass** die Notfall-Funktion (N) aktiviert wird, wenn sich das Fahrzeug (3) im jeweiligen Funktionsbereich (Gi) an einer Position (P) befindet, in der das Fahrzeug (3) die jeweils zugeordnete Funktionsregel (Ri) nicht mehr umsetzen kann.

18. Funktions-Steuereinrichtung (5) zur Durchführung eines Verfahrens nach einem der vorhergehenden Ansprüche, wobei die Funktions-Steuereinrichtung (5) ausgebildet ist,
- ein Fahrprofil (FP) zu empfangen, wobei das Fahrprofil (FP) mindestens eine Funktionsregel (Ri) beinhaltet, wobei jede Funktionsregel (Ri) einem Funktionsbereich (Gi) auf dem Betriebshof (1) zugeordnet ist und die Funktionsregel (Ri) festlegen kann, wie das Fahrzeug (3) auf dem Betriebshof (1) in dem jeweils zugeordneten Funktionsbereich (Gi) angesteuert werden kann und/oder nicht angesteuert werden darf;
- fortlaufend eine Position (P) des Fahrzeuges (3) auf dem Betriebshof (1) zu ermitteln;
- aus dem empfangenen Fahrprofil (FP) den Funktionsbereich (Gi) zu ermitteln, der der aktuell ermittelten Position (P) des Fahrzeuges (3) zugeordnet ist;
- aus dem empfangenen Fahrprofil (FP) die Funktionsregel (Ri) einzulesen, die dem ermittelten Funktionsbereich (Gi) zugeordnet ist; und
- das Fahrzeug (3) in Abhängigkeit der eingelesen Funktionsregel (Ri) derartig anzusteuern, dass die Funktionsregel (Ri) im aktuell durchfahrenen Funktionsbereich (Gi) umgesetzt werden kann.

19. Fahrzeug (3), insbesondere Nutzfahrzeug (3), mit einer Funktions-Steuereinrichtung (5) nach Anspruch 18.

## Claims

1. Method for coordinating a vehicle (3), in particular a commercial vehicle (3), in a depot (1), wherein the depot (1) is subdivided into a plurality of functional regions (Gi), wherein the vehicle (3) in the depot (1) is steered through at least some of the functional regions (Gi) into a defined target region (Z), the method comprising at least the following steps:
- receiving a driving profile (FP), wherein the driving profile (FP) contains at least one functional rule (Ri), wherein each functional rule (Ri) is associated with a functional region (Gi) in the depot (1), and the functional rule (Ri) defines how the vehicle (3) in the depot (1) is controlled and/or may not be controlled (ST2) in each associated functional region (Gi);
- during steering of the vehicle (3) through at least some of the functional regions (Gi) into the target region (Z):
-- continuously determining a position (P) of the vehicle (3) in the depot (1) (ST3);
-- determining the functional region (Gi) associated with the currently determined position (P) of the vehicle (3) from the received driving profile (FP) (ST4);
-- reading in the functional rule (Ri) associated with the determined functional region (Gi) from the received driving profile (FP) (ST5); and
-- controlling the vehicle (3) depending on the read-in functional rule (Ri) in such a way that the functional rule (Ri) is implemented in the functional region (Gi) currently being traveled through (ST6).

2. Method according to claim 1, **characterized in that** the driving profile (FP) is associated with the vehicle (3) and the driving profile (FP) is provided via a local network (10), for example a WLAN network (10a) of the depot (1).

3. Method according to claim 2, **characterized in that,** using access data (DZ) and/or authentication data (DA), the vehicle (3) dials into the local network (10) in order to obtain access to the local network (10) and to a site (1a) of the depot (1) in order to travel in the functional regions (Gi).

4. Method according to any of the preceding claims, **characterized in that** the vehicle (3) in the depot (1) is steered from an access region (G1) to a target region (Z) associated with the vehicle (3), wherein the functional regions (Gi) are traveled through en route from the access region (G1) to the target region (Z).

5. Method according to claim 4, **characterized in that** the target region (Z) is defined depending on freight (F) which is loaded or is to be loaded and/or depending on a subscriber identifier (TK) associated with the vehicle (3).

6. Method according to any of the preceding claims, **characterized in that** the functional rules (Ri) of the individual functional regions (Gi) are defined in the driving profile (FP) such that the vehicle (3) in the depot (1) is steered and/or may be steered only through the functional regions (Gi) which are necessary for reaching the target region (Z) and/or which are permitted for reaching the target region (Z).

7. Method according to any of the preceding claims, **characterized in that** the vehicle (3)in the depot (1) is steered manually or automatically through at least some of the functional regions (Gi).

8. Method according to any of the preceding claims, **characterized in that** the read-in functional rule (Ri) is implemented for the corresponding functional region (Gi) by at least one vehicle system (40) of the vehicle (3) being controlled and/or by control of at least one vehicle system (40) being limited and/or being prevented.

9. Method according to claim 8, **characterized in that** the vehicle system (40) is a brake system (20) and/or a drive system (22) and/or a steering system (24) of the vehicle (3), the control of which can be permitted or limited or prevented in order to implement the functional rule (Ri) in the corresponding functional region (Gi).

10. Method according to claim 8 or 9, **characterized in that** the vehicle system (40) is a level control system (21) and/or a unloading system (26) and/or a door system (28) and/or a coupling system (29), the control of which can be permitted or limited or prevented in order to implement the functional rule (Ri) in the corresponding functional region (Gi).

11. Method according to any of the preceding claims, **characterized in that** the functional rule (Ri) in the corresponding functional region (Gi) has at least one prohibition which is selected from the group consisting of:
an uncoupling prohibition (VA), a driving prohibition (VD), an unloading prohibition (VF), a reverse-driving prohibition (VR), a door-opening prohibition (VT), a turning prohibition (VW).

12. Method according to any of the preceding claims, **characterized in that** the functional rule (Ri) in the corresponding functional region (Gi) has a priority instruction (AV) and/or a maximum speed (vMax) to be maintained.

13. Method according to any of the preceding claims, **characterized in that** the plurality of functional regions (Gi) in the depot (3) are regions selected from the group consisting of:
an access region (G1), a lane region (G2), at least one buildings region (G3, G4) each having a building (2A, 2B) and ramps (Ai, Bi), a second buildings region (G4) having a building (2B) and ramps (Bi), a loading region (G5), a first parking region (G6) for parking a trailer (3b), a second parking region (G7) for placing a container (30) on a swap body (31), a silo region (G8), a waiting region (G9), an exit region (G10).

14. Method according to any of the preceding claims, **characterized in that** the continuous determination of the position (P) of the vehicle (3) takes place by determining absolute coordinates (KA) and/or relative coordinates (KR) of the vehicle (3) in the depot (1), for example via a position detection system (25) and/or by odometry (O), wherein the individual functional regions (Gi) are also defined by absolute coordinates (KA) and/or relative coordinates (KR).

15. Method according to any of the preceding claims, **characterized in that** the vehicle (3) is steered through the at least some functional regions (Gi) in the depot (1) on the basis of a planned trajectory (T), wherein the trajectory (T) is planned depending on the read-in functional rules (Ri) and/or the transmitted driving profile (FP), preferably in the vehicle (3) itself.

16. Method according to any of the preceding claims, **characterized in that** an emergency function (N) is provided, wherein, when the emergency function (N) is activated, independently of the specified functional rules (Ri) and/or the transmitted driving profile (FP), the vehicle (3) in the corresponding functional region (Gi) is steered, preferably by a remote operator (60).

17. Method according to claim 16, **characterized in that** the emergency function (N) is activated when the vehicle (3) in the corresponding functional region (Gi) is at a position (P) in which the vehicle (3) can no longer implement the associated function rule (Ri).

18. Function control device (5) for carrying out a method according to any of the preceding claims, wherein the function control device (5) is designed
- to receive a driving profile (FP), wherein the driving profile (FP) contains at least one functional rule (Ri), wherein each functional rule (Ri) is associated with a functional region (Gi) in the depot (1), and the functional rule (Ri) can define how the vehicle (3) in the depot (1) can be controlled and/or may not be controlled in the associated functional region (Gi);
- to continuously determine a position (P) of the vehicle (3) in the depot (1);
- to determine from the received driving profile (FP) the functional region (Gi) which is associated with the currently determined position (P) of the vehicle (3);
- to read in the functional rule (Ri) from the received driving profile (FP), which functional rule is associated with the determined functional region (Gi); and
- to control the vehicle (3) depending on the read-in functional rule (Ri) in such a way that the functional rule (Ri) can be implemented in the functional region (Gi) currently being traveled through.

19. Vehicle (3), in particular a commercial vehicle (3), comprising a function control device (5) according to claim 18.

## Revendications

1. Procédé de coordination d'un véhicule (3), en particulier d'un véhicule utilitaire (3), dans un dépôt (1), dans lequel le dépôt (1) est divisé en plusieurs zones fonctionnelles (Gi), dans lequel le véhicule (3) est commandé dans le dépôt (1) par au moins certaines des zones fonctionnelles (Gi) dans une zone cible (Z) définie, comportant au moins les étapes suivantes :
- réception d'un profil de conduite (FP), dans lequel le profil de conduite (FP) contient au moins une règle fonctionnelle (Ri), dans lequel chaque règle fonctionnelle (Ri) est associée à une zone fonctionnelle (Gi) dans le dépôt (1) et la règle fonctionnelle (Ri) définit comment le véhicule (3) est commandé et/ou ne doit pas être commandé dans le dépôt (1) dans la zone fonctionnelle (Gi) associée respective (ST2) ;
- pendant que le véhicule (3) est commandé par au moins certaines des zones fonctionnelles (Gi) dans la zone cible (Z) :
-- détermination en continu d'une position (P) du véhicule (3) dans le dépôt (1) (ST3) ;
-- détermination de la zone fonctionnelle (Gi), à laquelle la position (P) actuellement déterminée du véhicule (3) est associée, à partir du profil de conduite (FP) reçu (ST4) ;
-- lecture de la règle fonctionnelle (Ri), qui est associée à la zone fonctionnelle (Gi) déterminée à partir du profil de conduite (FP) reçu (ST5) ; et
-- commande du véhicule (3) en fonction de la règle fonctionnelle (Ri) lue de telle sorte que la règle fonctionnelle (Ri) soit mise en oeuvre dans la zone fonctionnelle (Gi) actuellement parcourue (ST6).

2. Procédé selon la revendication 1, **caractérisé en ce que** le profil de conduite (FP) est associé au véhicule (3) et le profil de conduite (FP) est mis à disposition par l'intermédiaire d'un réseau local (10), par exemple un réseau WLAN (10a) du dépôt (1).

3. Procédé selon la revendication 2, **caractérisé en ce que** le véhicule (3) se connecte au réseau local (10) par l'intermédiaire de données d'accès (DZ) et/ou de données d'authentification (DA), afin d'obtenir un accès au réseau local (10) ainsi qu'à un terrain (1a) du dépôt (1) pour circuler dans les zones fonctionnelles (Gi).

4. Procédé selon l'une des revendications précédentes, **caractérisé en ce que** le véhicule (3) est commandé dans le dépôt (1) d'une zone d'accès (G1) à une zone cible (Z) associée au véhicule (3), dans lequel les zones fonctionnelles (Gi) sont parcourues sur le trajet de la zone d'accès (G1) à la zone cible (Z).

5. Procédé selon la revendication 4, **caractérisé en ce que** la zone cible (Z) est définie en fonction d'une cargaison (F) chargée ou à charger et/ou en fonction d'un identifiant d'abonné (TK) associé au véhicule (3).

6. Procédé selon l'une des revendications précédentes,
**caractérisé en ce que** les règles fonctionnelles (Ri) des zones fonctionnelles (Gi) individuelles sont définies dans le profil de conduite (FP) de telle sorte que le véhicule (3) est commandé et/ou peut être commandé dans le dépôt (1) uniquement à travers les zones fonctionnelles (Gi), qui sont nécessaire pour atteindre la zone cible (Z) et/ou qui sont autorisées pour atteindre la zone cible (Z).

7. Procédé selon l'une des revendications précédentes,
**caractérisé en ce que** le véhicule (3) est commandé sur le dépôt (1) manuellement ou de manière automatisée par au moins certaines des zones fonctionnelles (Gi).

8. Procédé selon l'une des revendications précédentes,
**caractérisé en ce que** la règle fonctionnelle (Ri) lue est mise en oeuvre pour la zone fonctionnelle (Gi) respective, **en ce qu'**au moins un système de véhicule (40) du véhicule (3) est commandé et/ou une commande d'au moins un système de véhicule (40) est limitée et/ou est empêchée.

9. Procédé selon la revendication 8, **caractérisé en ce que** le système de véhicule (40) est un système de frein (20) et/ou un système d'entraînement (22) et/ou un système de direction (24) du véhicule (3), dont la commande peut être autorisée ou limitée ou empêchée, afin de mettre en oeuvre la règle fonctionnelle (Ri) dans la zone fonctionnelle (Gi) respective.

10. Procédé selon la revendication 8 ou 9, **caractérisé en ce que** le système de véhicule (40) est un système de régulation de niveau (21) et/ou un système de déchargement (26) et/ou un système de porte (28) et/ou un système d'accouplement (29), dont la commande peut être autorisée ou limitée ou empêchée, afin de mettre en oeuvre la règle fonctionnelle (Ri) dans la zone fonctionnelle (Gi) respective.

11. Procédé selon l'une des revendications précédentes, **caractérisé en ce que** la règle fonctionnelle (Ri) dans la zone fonctionnelle (Gi) respective présente au moins une interdiction, qui est choisie dans le groupe constitué de :
une interdiction de dételer (VA), une interdiction de circuler (VD), une interdiction de décharger (VF), une interdiction de reculer (VR), une interdiction d'ouvrir les portes (VT), une interdiction de faire demi-tour (VW).

12. Procédé selon l'une des revendications précédentes, **caractérisé en ce que** la règle fonctionnelle (Ri) dans la zone fonctionnelle (Gi) respective présente une indication de priorité (AV) et/ou une vitesse maximale à respecter (vMax).

13. Procédé selon l'une des revendications précédentes,
**caractérisé en ce que** les plusieurs zones fonctionnelles (Gi) dans le dépôt (3) sont des zones, qui sont choisies dans le groupe constitué de :
une zone d'accès (G1), une zone de voie de circulation (G2), au moins une zone de bâtiment (G3, G4) comportant respectivement au moins un bâtiment (2A, 2B) et comportant des rampes (Ai, Bi), une seconde zone de bâtiment (G4) comportant un bâtiment (2B) et comportant des rampes (Bi), une zone de chargement (G5), une première zone stationnement (G6) pour stationner une remorque (3b), une seconde zone de stationnement (G7) pour stationner un conteneur (30) sur un pont interchangeable (31), une zone de silo (G8), une zone d'attente (G9), une zone de sortie (G10).

14. Procédé selon l'une des revendications précédentes,
**caractérisé en ce que** la détermination en continu de la position (P) du véhicule (3) est réalisée par détermination de coordonnées absolues (KA) et/ou de coordonnées relatives (KR) du véhicule (3) dans le dépôt (1), par exemple par l'intermédiaire d'un système de détection de position (25) et/ou par odométrie (O), dans lequel également les zones fonctionnelles (Gi) individuelles sont déterminées par des coordonnées absolues (KA) et/ou des coordonnées relatives (KR).

15. Procédé selon l'une des revendications précédentes, **caractérisé en ce que** le véhicule (3) est commandé à l'aide d'une trajectoire (T) planifiée par les au moins certaines zones fonctionnelles (Gi) dans le dépôt (1), dans lequel la trajectoire (T) est planifiée en fonction des règles fonctionnelles (Ri) lues et/ou du profil de conduite (FP) transmis, de préférence dans le véhicule (3) lui-même.

16. Procédé selon l'une des revendications précédentes,
**caractérisé en ce qu'**une fonction d'urgence (N) est prévue, dans lequel le véhicule (3), lors de l'activation de la fonction d'urgence (N) est commandé indépendamment des règles fonctionnelles (Ri) prescrites et/ou du profil de conduite (FP) transmis dans la zone fonctionnelle (Gi) respective, de préférence par un téléopérateur (60).

17. Procédé selon la revendication 16, **caractérisé en ce que** la fonction d'urgence (N) est activée lorsque le véhicule (3) se trouve dans une zone fonctionnelle (Gi) respective au niveau d'une position (P), dans laquelle le véhicule (3) ne peut plus mettre en oeuvre la règle fonctionnelle (Ri) associée respective.

18. Dispositif de commande fonctionnel (5) permettant de réaliser un procédé selon l'une des revendications précédentes, dans lequel le dispositif de commande fonctionnel (5) est conçu,
- pour recevoir un profil de conduite (FP), dans lequel le profil de conduite (FP) contient au moins une règle fonctionnelle (Ri), dans lequel chaque règle fonctionnelle (Ri) est associée à une zone fonctionnelle (Gi) dans le dépôt (1) et la règle fonctionnelle (Ri) peut définir comment le véhicule (3) peut être commandé et/ou ne doit pas être commandé dans le dépôt (1) dans la zone fonctionnelle (Gi) associée respective ;
- pour déterminer en continu une position (P) du véhicule (3) dans le dépôt (1) ;
- pour déterminer à partir du profil de conduite (FP) reçu la zone fonctionnelle (Gi), à laquelle la position (P) actuellement déterminée du véhicule (3) est associée ;
- pour lire à partir du profil de conduite (FP) reçu la règle fonctionnelle (Ri), qui est associée à la zone fonctionnelle (Gi) déterminée ; et
- pour commander le véhicule (3) en fonction de la règle fonctionnelle (Ri) lue de telle sorte que la règle fonctionnelle (Ri) puisse être mise en oeuvre dans la zone fonctionnelle (Gi) actuellement parcourue.

19. Véhicule (3), en particulier véhicule utilitaire (3), comportant un dispositif de commande fonctionnel (5) selon la revendication 18.
